# EUROPEAN PATENT SPECIFICATION

(11) **EP 1 709 315 B1**
(45) Date of publication and mention of the grant of the patent: **08.09.2010**
(21) Application number: 05704738.3
(22) Date of filing: 21.01.2005
(51) Int. Cl.: F02M 25/03, F02B 47/02

(54) **A METHOD AND A SYSTEM FOR CONTROL OF A DEVICE FOR COMPRESSION**
VERFAHREN UND SYSTEM ZUR STEUERUNG EINER VORRICHTUNG ZUR KOMPRIMIERUNG
PROCEDE ET SYSTEME DE CONTROLE D'UN DISPOSITIF DE COMPRESSION

(30) Priority: 22.01.2004 SE 0400129
(43) Date of publication of application: 11.10.2006
(73) Proprietor: Cargine Engineering AB, 254 83 Helsingborg (SE)
(72) Inventor: HEDMAN, Mats, S-640 34 Sparreholm (SE)
(74) Representative: Fröderberg, Anders Oskar
(86) International application number: PCT/SE2005/000065
(87) International publication number: WO 2005/071249

(56) References cited:
- EP-A1- 0 553 364
- EP-A1- 0 717 183
- DE-A1- 3 236 789
- DE-U1- 9 218 217
- GB-A- 2 147 947
- US-A- 4 611 557
- US-A- 5 718 194
- US-A1- 2004 003 781
- YAMAHA ET AL: 'GLOW PLUG ASSISTED COLD START OF PREMIXED COMPRESSION IGNITION' JOURNAL OF KONES INTERNAL COMBUSTION ENGINES vol. 10, no. 1-2, 2003, pages 1 - 8

## Description

### TECHNICAL FIELD

The present invention relates to a method of compression of a medium in the compression chamber of a compressor, by which method a liquid, in the state of a spray, is introduced into the compression chamber during a compression stroke.

The invention also relates to a compressor with a system for controlling a device for the compression of a medium in the compression chamber of the compressor, by which a liquid, in the state of a spray, is introduced into the compression chamber during a compression stroke, and comprising means for pressurizing and heating said liquid and means for introducing the liquid into the compression chamber, and means for determining the pressure and/or the temperature in the compression chamber.

The invention is particularly suited for being implemented onto compressors .

### THE BACKGROUND OF THE INVENTION

Compressed air is a necessity for combustion engines of different types and is also used to a large extent within the industry. Independent of which type of combustion engines or compressors that is used, and upon the compression of the medium, air or gas, heat is generated, and if said heat could be conducted away as it was generated, the energy required for performing said compression could be decreased. This is a well known fact, and it is called isotherm compression. In combustion engines, the generation of nitrogen oxides could be decreased by having a lower combustion temperature, and the generation of carbon dioxide could be decreased by the aid of an improved efficiency. For the users of compressed air, the operational costs could, thereby, decrease. An isotherm compression, or a compression upon simultaneous cooling could be of value from an environmental point of view.

There have been a large number of attempts to inject water during or before a compression. An attempt to improve the properties of a screw compressor are disclosed in licentiates dissertation named "HEAT EXCHANGE IN LIQUID INJECTED COMPRSSORS", 1986-01-30, by Jan-Gunnar Persson. There, water droplets were sprayed simultaneously with the introduction of air, and the purpose was to let the water droplets absorb the compression heat from the air in order to decrease the compression work normally required. Preferably, the water droplets would evaporate. Secondly, a plurality of small droplets in the air would, in total, constitute a large cooling surface area. The compression work did decrease to some extent, but the decrease corresponded, in total, to the extra work that was required in order to accomplish the spray. As a whole, the result of the attempt, was that it was not possible to prove any decrease of work. The compression rate was to rapid to enable heat to be transferred from the air to the water droplets, resulting in the non-appearance of any evaporation. This resulted in a need of substantially more water, but, however, the droplets could not be made sufficiently small; in other words, the total cooling surface area, which was the sum of the surfaces of all droplets, was to small. The more and the smaller droplets, the better cooling effect. Accordingly, favourable factors for an isotherm compression include a large cooling surface area and more time during the compression stroke. These factors are individually exchangeable. For example, a very large cooling surface area may provide for the use of shorter time.

There have also been attempts to inject water into combustion engines for the purpose of decreasing the combustion temperature and, accordingly, the generation of nitrogen oxides, NOx. Other experiments have focused on attaining an improved efficiency by evaporating water against the piston tip and other hot surfaces that surround the combustion chamber. These experiments and tests have proven that the generation of nitrogen oxides decreases with a decreased combustion temperature, and that the efficiency, at least in some cases, has been effected in a favourable direction. However, the results have not been good enough to motivate the use of any commercial systems for transporting and/or recycling water from the exhaust gases of the engines.

The present invention refers to compressors, thereby excluding combustion engines. Conventional compressors to which power is supplied in order to compress a medium, such as air, in the compression chamber, and to make use of said compressed medium at a subsequent stage, are regarded as closest prior art to the present invention. In such a compressor there will be a temperature increase in the compression chamber during operation, which will contribute to an increased amount of work being required for the provision of a predetermined amount of pressurised air of a predetermined pressure. Accordingly, the heat increase reduces the efficiency of such a compressor.

US, A1, 20040003781, shows how a sub critical or a super critical water spray is injected into a compression chamber of a combustion engine during a compression. The temperature as well as the pressure of the injected water are relatively high. Sub critical water is referred to as water with a temperature below the critical temperature of water, which is 373°C, and a super critical temperature is referred to as when the water is above said temperature, which is the temperature at which the liquid phase and the gas phase are not any longer possible to distinguish between.

The technique described in US, A1, 20040003781 is primarily focused on the reduction of the NOx-exhaust, and not a reduction of the compression work. In particular it focuses on combustion engines.

DE 92 18 217 U, DE 32 36 789 A1, as well as the article "Glow Plug Assisted Cold Start of Premixed Compression Ignition" (Yamaha et al. "Journal of kones internal combustion engines", vol. 10, no.1-2, 2003), are other examples of prior art in which there is suggested to inject water into the combustion chamber of a combustion engine and let the water become steam in order to increase the efficiency and to reduce emissions. However, there is no pointer towards using the above-mentioned principles, suggested for combustion engines, in the field of compressors.

### THE OBJECT OF THE INVENTION

The object of the present invention is to solve the problems mentioned above by defining a new method that defines a principal which is applicable for the injection of water during compression into the compression chamber of compressors, for the purpose of decreasing the compression work in such a compressor.

Accordingly, the invention should result in that the water that is used as an injection medium is used in such a way that it increases the efficiency of compressors.

### SUMMARY OF THE INVENTION

The object of the present invention is achieved, for compressors, by the method according to the preamble of patent claim 1, said method being **characterized in that** the liquid is pressurized and heated, before it is introduced into the compression chamber, to such an extent that at least a part of the droplets of the spray explodes spontaneously upon entrance into the compression chamber. All known methods according to prior art are focused on combustion engine applications. It seems as though prior art is fully focused on what kind of advantages can be obtained through the type of cooling claimed in patent claim 1 in a combustion process, but not in a pure compression process.

The object of the invention is also achieved by means of the initially defined control system, which is **characterized in that** it comprises a control unit which is operatively connected with the means for the determination of the pressure and/or the temperature and with the means for pressurisation and heating of the liquid, and that includes a computer program, which is adapted for controlling the means for introducing the liquid into the compression chamber upon basis of the information about the pressure and the temperature in the compression chamber, in accordance with the method according to the invention.

According to preferred embodiments of the method, the liquid is, preferably, pressurized to such an extent that, at the moment of introduction thereof, it has a steam pressure that is above the pressure that, at the moment of introduction, exist in the compression chamber. Further, it is preferred that the liquid is heated to such an extent that, at the moment of introduction thereof, it has a temperature that is above the boiling point of the liquid for the temperature and the pressure that, at the moment of introduction thereof, exist in the compression chamber. It is also preferred that the liquid is heated to such an extent that, at the moment of introduction thereof, it has a temperature that is below the temperature of the medium at said moment of introduction.

The invention makes the generation of very small and many droplets possible, resulting in an absorption of the compression heat through a remarkably large cooling surface, and an evaporation, in its turn resulting in a reduced compression work, reduced production casts and a reduced affection of the environment. When the invention is implemented at piston compressors, it must be realized that an extensively large mass of introduced water may cause a so called water stroke. It should be realized that at least a partial evaporation of the exploded spray droplets will occur spontaneously as well as immediately upon the entrance of the liquid into the chamber. A continued evaporation of liquid that has not yet been evaporated takes place during the rest of the compression stroke as the pressure and the temperature in the chamber increase. Preferably, all the liquid that has been introduced into the compression chamber is evaporated during the compression stroke. In this case, liquid is not referred to as fuel (combustion engines), but primarily as water. Preferably, the pressure and the temperature of the spray droplets are such that a substantial part, preferably more than 10%, and more preferably more than 50%, and most preferably all the spray droplets explode upon the entrance into the compression chamber.

An implementation of the present invention will motivate a use of said system commercially for combustion engines. Preferably, the method is possible to use for all types of combustion engines in which the air is compressed. The water that is heated and/or evaporated during the compression and upon the implementation of the invention, absorbs and drains off the compression heat and reduces, accordingly, the compression work, thereby improving the efficiency of the engine. The combustion that follows the compression stroke is initiated with a lower temperature, resulting in a lower maximum temperature and a reduced generation of NOx. However, there is one further temperature-reducing factor, namely that a larger mass, operating medium and water steam, should be heated, instead of only the operating medium, by the energy that is set free during the combustion. Accordingly, the water steam has the same effect as so called EGR, Exhaust Gas Regeneration, which is a common method for the purpose of reducing the generation of NOx through a lower temperature at the combustion. The need of cylinder cooling is reduced, resulting in an improvement of the efficiency. The invention is particularly suitable when hydrogen gas or natural gas is used as fuel, since the recycling of the water is facilitated when the exhaust gases are mainly constituted by water. The method is also suitable upon the compression of, for example, hydrogen gas or natural gas to be used as fuel in combustion engines and in fuel cells.

However, it is preferred that the liquid is heated to such an extent that, at the moment of introduction thereof, it has a temperature that is below the temperature of the medium at the moment of introduction.

Preferably, the liquid that is introduced in the compression chamber in accordance with the invention is water, and the medium which is compressed in the compression chamber is air.

Further features and advantages of the present invention will be disclosed in the following description and in the remaining patent claims.

### BRIEF DESCRIPTION OF THE DRAWINGS

Hereinafter, the invention will, by way of example, be described with reference to the annexed drawings, on which:

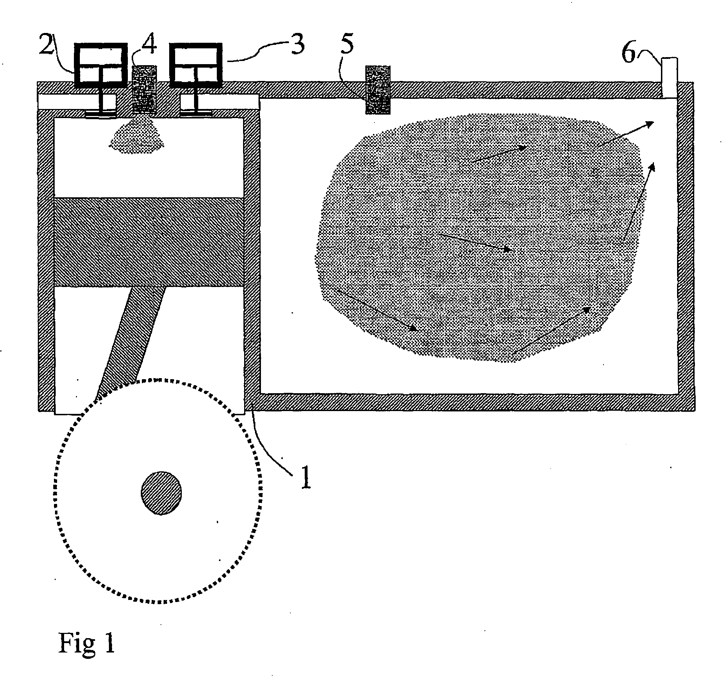

Fig. 1 is a schematic representation of a device for the injection of water into a compressor and into a tank connected to the latter.

### DETAILED DESCRIPTION OF THE INVENTION

The principal basis of the invention can be seen in table 1. In column A there is shown some different pressures (bar), by adiabatic compression of air, where the air pressure before compression is 1 bar and the temperature is 273 K. Kappa is 1,4. In column B, the temperature (K) is shown for the compressed air with the different pressures according to column A. In column C the boiling point temperature (K) of the water is shown for the different pressures according to column A. The boiling point temperatures of the water for the different pressures are ocularly retrieved from steam pressure curves. Column D shows the pressurisation which is necessary for preventing the water from boiling at the temperature according to column B.

**Table 1: Different pressures and temperatures during adiabatic compression of air, and the boiling point temperature of the water at these pressures. The reference from which the equations for the calculation of the values at the adiabatic compression, and the information about the boiling point of the water and the necessary pressurisation are from the book Energiteknik, Henrik Alvarez, published by Studentlitteratur i Lund 1990.**

| A | B | C | D |
|---|---|---|---|
| (bar) | (°K) | (°K) | (bar) |
| 20 | 642,5 | 485 | 210 |
| 10 | 527,2 | 453 | 40 |
| 6 | 455,6 | 432 | 10 |
| 5 | 432,5 | 423 | 6 |
| **4,5** | **419,8** | **420** | **4,5** |
| 4 | 405,7 | 417 | 3 |
| 3 | 373,8 | 406 | 1 |

Table 1 shows that there is an intersection, marked with bold face, at approximately 4,5 bar. At lower pressures, the boiling point temperature of the water is above the temperature of the compressed air while, simultaneously, the pressurisation necessary in order to prevent the water from boiling is lower than the pressure of the compressed air. At pressures above 4,5 bar, the boiling point temperature of the water is lower than the temperature of the compressed air while, simultaneously, the pressurisation necessary in order to prevent the water from boiling is higher than the pressure of the compressed air. This is the basis for the inventive concept. During injection, spraying, of the water into the medium, which is air or gas, to be compressed, the water should be pressurized and heated to a temperature that will result in a fierce boiling, or explosion, of the water, resulting in a very fine division thereof to water droplets so small that a sufficiently large cooling surface area is obtained, such that heat can be drained off through the heating of the water droplets and/or through an evaporation. As the steam pressure is higher than the compression pressure, an exploding action is achieved on the water as the latter is depressurized at the moment of entrance into the medium under compression. The atomization has been allowed since the water has been supplied with heat before being introduced into the medium to be compressed. It is a feature of the invention that heat, which otherwise would be lost through, for example, exhaust gases and/or a cylinder cooling or in other ways in other contexts, also called waste heat, is used for the heating of the water before the latter is supplied to the medium to be compressed. This can be accomplished through a heat exchange between the combustion exhaust gases and the water, between a cylinder cooling medium and the water, or directly between the cylinder material and the water.

The compression conditions vary between different compressors, as well as the pressure and the temperature of the medium before compression. Upon the implementation of the invention, the conditions should, preferably, be such that there is an intersection similar to the one described above. With pre-compressed and pre-cooled air, which is common by combustion engines, the intersection may be at a compression pressure which is substantially higher than said 4,5 bar. But if the condition is according to table 1, the region above the intersection at 4,5 bar is interesting. Accordingly, the water should be introduced after that the compression pressure has past 4,5 bar. Further, the water should be pressurized and should have a temperature that results in it being depressurized and starting to boil immediately at the introduction. The introduction is preformed by spraying the water into the compression chamber through an inlet valve adapted for the purpose. The already small droplets of the spray will explode during the depressurisation and boiling, and become small water droplets that, on one hand, immediately evaporate and, on the other hand, evaporates during the following compression. A continued generation of compression heat will, accordingly, result in continued heating of non-evaporated water droplets and in a subsequent boiling and evaporation, and the heat used for the evaporation counteracts any further increase of the temperature of the medium. Accordingly, heat is drained off from the air under compression, for the generation of the water steam during the compression. Preferably, the control system according to the invention comprises sensors for sensing the pressure and the temperature in the compression chamber, as well as a control unit, which is operatively connected with these sensors and with the inlet valve, and provided with software constituted by a computer program that controls when the liquid, the water, is to be injected upon basis of the information that it gets from the pressure and temperature sensors.

Table 2 shows the theoretic saving of power upon a plural step adiabatic compression with intercooling, as compared to isotherm compression. The use of intercooling is the contemporary technique for reducing the compression work. The plural step process is space-demanding.

**Table 2: Theoretic saving of power by cooled compression. Plural step adiabatic compression with inter cooling and isotherm compression.**

| Pressure condition | 2-steps | 3-steps | Isotherm |
|---|---|---|---|
| 20 bar | 21,1% | 26,8% | 36,8% |
| 25 bar | 22,6% | 28,7% | 39,0% |

Reference: 1-step adiabatic compression. Kappa is 1,4. The reference source is a preliminary study named ISOTERM KOMPRESSION, by Jan-Gunnar Persson, 2000-01-16. The preliminary study has been done, under secrecy agreement, on the order of the present inventor. The report has not been published.

Table 3 shows the largest possible heat absorption by means of evaporation at the intersection line according to table 1, compared to the need of cooling by isotherm compression from 1 to 25 bars. Further, it can be seen that the possible theoretical saving is 289/389 times the saving of power for an isotherm compression, which, according to table 2, is 39% upon compression up to 25 bar. The saving that, theoretically, is possible by the implementation of the invention is, accordingly, 289/389 x 39 = 28,97%; this is comparable to the saving of power at the 3-step compression according to table 2. However, the invention makes it possible to perform the compression in one step, in one and the same cylinder, which is a remarkable advantage.

**Table 3: is a table that shows the maximum heat absorption per kg air at the intersection line according to table 1, compared to the need of cooling per kg air at isotherm compression from 1 to 25 bar. Table 3 also shows the maximum content of steam in air at a given pressure and temperature, in other words the condensation limit, according to an intersection line in table 1. Kappa is 1,4. The reference source is the preliminary study named ISOTERM KOMPRESSION, by Jan-Gunnar Persson, 2000-01-16.**

| Temp (°K) | Steam pressure saturation (bar) | Heat of evaporation (kJ/kg) | Max heat absorption (kJ/kg) | Need of cooling by isotherm compression (kJ/kg) |
|---|---|---|---|---|
| 421 | 4,51 | 2119 | 289 | 389 |

Fig. 1 shows a compressor with a tank 1 and an air inlet valve 2 and an outlet valve 3 through which compressed air is conducted to the tank. From the tank pressurized and suitably cooled air is conducted to a combustion engine through a connection 6. There are two inlet valves for heated water; on one hand the valve 4 in the compressor and on the other hand a valve 5 in the tank. A compression takes place in the compressor, and water is sprayed, with regard taken to the prevention of any water stroke. Evaporation, in other words a cooling of air, takes place in the tank. Here, there is shown a tank connected to a compressor. The tank may also constitute a source for the feeding of pressurized air to the combustion chamber in a combustion engine.

## Claims

1. A method of compression of a medium in a compression chamber of a compressor, by which method a liquid, in a state of a spray, is introduced into the compression chamber during a compression stroke, **characterized in that** the liquid is pressurized and heated before being introduced into the compression chamber, to such an extent that at least a part of the droplets of the spray explodes spontaneously upon entrance into the compression chamber.

2. A method according to claim 1, **characterized in that** the liquid is pressurized to such an extent, at the moment of introduction, it has a steam pressure that is above the pressure that, at the moment of introduction, exists in the compression chamber.

3. A method according to claim 1, **characterized in that** the liquid is heated to such an extent that, at the moment of introduction, it has a temperature that is above the boiling point of the liquid for the temperature and the pressure that, at the moment of introduction, exists in the compression chamber.

4. A method according to anyone of claims 1-3, **characterized in that** the liquid is heated to such an extent that, at the moment of introduction, it has a temperature that is below the temperature of the medium at the moment of introduction.

5. A method according to anyone of the preceding claims, **characterized in that** a mixture of the previously compressed medium and the vaporized liquid is evacuated after the compression, and **in that** the liquid, after said evacuation, is separated by means of condensation.

6. A method according to claim 5, **characterized in that** the liquid is refined from solid contamination and is re-transported to a suitable storing chamber.

7. A method according to anyone of the preceding claims, **characterized in that** the liquid that is introduced is water and that the medium that is compressed in the compression chamber is air.

8. A compressor with a system for controlling a device for the compression of a medium in the compression chamber (15) of the compressor, by which a liquid, in the state of a spray, is introduced into the compression chamber (15) during a compression stroke, comprising means for pressurizing and heating said liquid and means (10) for introducing the liquid into the compression chamber (15), and means (12) for determining the pressure and/or the temperature in the compression chamber (15), **characterized in that** it comprises a control unit (5) that is operatively connected with the means (12) for determining the pressure and/or the temperature and with the means for pressurizing and heating the liquid, and including a computer program which is adapted for the purpose of controlling the means (10) for the introduction of the liquid into the compression chamber (15) upon basis of the information concerning the pressure and the temperature in the compression chamber and in accordance with the method according to anyone of claims1-7.

## Patentansprüche

1. Verfahren zum Verdichten eines Mediums in einer Verdichtungskammer eines Kompressors, durch das eine Flüssigkeit im Zustand eines Sprühnebels während eines Verdichtungshubs in die Verdichtungskammer eingeleitet wird,
**dadurch gekennzeichnet, dass** die Flüssigkeit, bevor sie in die Verdichtungskammer eingeleitet wird, in einem derartigen Maß unter Druck gesetzt und erwärmt wird, dass mindestens ein Teil der Tröpfchen des Sprühnebels beim Eintritt in die Verdichtungskammer spontan explodiert.

2. Verfahren nach Anspruch 1, **dadurch gekennzeichnet, dass** die Flüssigkeit in einem derartigen Maß unter Druck gesetzt wird, dass sie zum Zeitpunkt der Einleitung einen Dampfdruck aufweist, der höher ist als der zum Zeitpunkt der Einleitung in der Verdichtungskammer vorherrschende Druck.

3. Verfahren nach Anspruch 1, **dadurch gekennzeichnet, dass** die Flüssigkeit in einem derartigen Maß erwärmt wird, dass sie zum Zeitpunkt der Einleitung eine Temperatur hat, die oberhalb des Siedepunkts der Flüssigkeit für die Temperatur und den Druck liegt, die zum Zeitpunkt der Einleitung in der Verdichtungskammer vorherrschen.

4. Verfahren nach einem der Ansprüche 1 bis 3, **dadurch gekennzeichnet, dass** die Flüssigkeit in einem derartigen Maß erwärmt wird, dass sie zum Zeitpunkt der Einleitung eine Temperatur hat, die unterhalb der Temperatur liegt, die das Medium zum Zeitpunkt der Einleitung hat.

5. Verfahren nach einem der vorangehenden Ansprüche, **dadurch gekennzeichnet, dass**
ein Gemisch aus dem zuvor verdichteten Medium und der verdampften Flüssigkeit nach dem Verdichtungsvorgang ausgeräumt wird, und
die Flüssigkeit nach dem Ausräumen durch Kondensation abgetrennt wird.

6. Verfahren nach Anspruch 5, **dadurch gekennzeichnet, dass** die Flüssigkeit von festen Verunreinigungen gereinigt und zu einer geeigneten Speicherkammer zurücktransportiert wird.

7. Verfahren nach einem der vorangehenden Ansprüche, **dadurch gekennzeichnet, dass**
die eingeleitete Flüssigkeit Wasser ist, und
das in der Verdichtungskammer verdichtete Medium Luft ist.

8. Kompressor mit einem System zum Steuern einer Vorrichtung zum Verdichten eines Mediums in der Verdichtungskammer (15) des Kompressors, durch den eine Flüssigkeit im Zustand eines Sprühnebels während eines Verdichtungshubs in die Verdichtungskammer (15) eingeleitet wird, mit:
einer Einrichtung zum Setzen und Erwärmen der Flüssigkeit;
einer Einrichtung (10) zum Einleiten der Flüssigkeit in die Verdichtungskammer (15); und
einer Einrichtung (12) zum Bestimmen des Drucks und/oder der Temperatur in der Verdichtungskammer (15);
**dadurch gekennzeichnet, dass** der Kompressor aufweist:
eine Steuereinheit (5), die mit der Einrichtung (12) zum Bestimmen des Drucks und/oder der Temperatur und mit der Einrichtung zum Unter-Druck-Setzen und Erwärmen der Flüssigkeit betrieblich verbunden ist, und ein Computerprogramm aufweist, das dazu geeignet ist, die Einrichtung (10) zum Einleiten der Flüssigkeit in die Verdichtungskammer (15) auf der Basis von Information, die mit dem Druck und der Temperatur in der Verdichtungskammer in Beziehung steht, und gemäß dem Verfahren nach einem der Ansprüche 1 bis 7 zu steuern.

## Revendications

1. Procédé de compression d'un milieu dans une chambre de compression d'un compresseur, procédé par lequel un liquide, sous la forme d'un spray, est introduit dans la chambre de compression lors d'une course de compression, **caractérisé en ce que** le liquide est pressurisé et chauffé avant d'être introduit dans la chambre de compression, dans une mesure telle qu'au moins une partie des gouttelettes du spray explose spontanément en entrant dans la chambre de compression.

2. Procédé selon la revendication 1, **caractérisé en ce que** le liquide est pressurisé dans une mesure telle que, au moment de l'introduction, il a une pression de vapeur qui est supérieure à la pression qui, au moment de l'introduction, existe dans la chambre de compression.

3. Procédé selon la revendication 1, **caractérisé en ce que** le liquide est chauffé dans une mesure telle que, au moment de l'introduction, il a une température qui est supérieure au point d'ébullition du liquide pour la température et la pression qui, au moment de l'introduction, existe dans la chambre de compression.

4. Procédé selon l'une quelconque des revendications 1 à 3, **caractérisé en ce que** le liquide est chauffé dans une mesure telle que, au moment de l'introduction, il a une température qui est inférieure à la température du milieu au moment de l'introduction.

5. Procédé selon l'une quelconque des revendications précédentes, **caractérisé en ce qu'**un mélange du milieu préalablement comprimé et du liquide vaporisé est évacué après la compression, et **en ce que** le liquide, après ladite évacuation, est séparé au moyen d'une condensation.

6. Procédé selon la revendication 5, **caractérisé en ce que** le liquide est débarrassé des contaminants solides et est retransporté vers une chambre de stockage appropriée.

7. Procédé selon l'une quelconque des revendications précédentes, **caractérisé en ce que** le liquide qui est introduit est l'eau et **en ce que** le milieu qui est comprimé dans la chambre de compression est l'air.

8. Compresseur doté d'un système pour commander un dispositif pour la compression d'un milieu dans la chambre de compression (15) du compresseur, par lequel un liquide, sous la forme d'un spray, est introduit dans la chambre de compression (15) lors d'une course de compression, comprenant un moyen pour pressuriser et chauffer ledit liquide et un moyen (10) pour introduire le liquide dans la chambre de compression (15), et un moyen (12) pour déterminer la pression et/ou la température dans la chambre de compression (15), **caractérisé en ce qu'**il comprend une unité de commande (5) qui est connectée de façon opérationnelle au moyen (12) pour déterminer la pression et/ou la pression et au moyen pour pressuriser et chauffer le liquide, et comprenant un programme informatique qui est adapté pour commander le moyen (10) pour l'introduction du liquide dans la chambre de compression (15) sur la base des informations concernant la pression et la température dans la chambre de compression et en conformité avec le procédé selon l'une quelconque des revendications 1 à 7.
